# EUROPEAN PATENT APPLICATION

(11) **EP 4 629 595 A1**
(43) Date of publication of application: **08.10.2025**
(21) Application number: 23909783.5
(22) Date of filing: 21.11.2023
(51) Int. Cl.: H04L 65/80, H04W 4/80

(54) **AUDIO STREAM TRANSMISSION METHOD AND APPARATUS, AND TERMINAL DEVICE**

(30) Priority: 30.12.2022 CN 202211731440
(71) Applicant: Huawei Technologies Co., Ltd., Shenzhen, Guangdong 518129 (CN)
(72) Inventor: SU, Jiongjin, Shenzhen, Guangdong 518129 (CN)
(74) Representative: Maiwald GmbH
(86) International application number: PCT/CN2023/132971
(87) International publication number: WO 2024/139851

(57) **Abstract**

Embodiments of this application provide an audio stream transmission method and apparatus, and a terminal device. In the audio stream transmission method, after obtaining a status of the terminal device, the terminal device determines an adjustment manner of an encoding bit rate of an audio stream based on the status of the terminal device, and then sends the adjustment manner to a central device. The central device adjusts the encoding bit rate of the audio stream based on the adjustment manner. Then, the central device sends the audio stream by using an adjusted encoding bit rate, and the terminal device receives the audio stream that is sent by the central device at the adjusted encoding bit rate. In this way, the status of the terminal device can be identified in time, and the encoding bit rate of the audio stream between the terminal device and the central device is adjusted in time, thereby alleviating or avoiding unsmooth playing, and improving user experience.

## Description

This application claims priority to Chinese Patent Application No. 202211731440.5, filed with the China National Intellectual Property Administration on December 30, 2022 and entitled "AUDIO STREAM TRANSMISSION METHOD AND APPARATUS, AND TERMINAL DEVICE", which is incorporated herein by reference in its entirety.

### TECHNICAL FIELD

Embodiments of this application relate to the field of intelligent terminal technologies, and in particular, to an audio stream transmission method and apparatus, and a terminal device.

### BACKGROUND

During transmission of an audio stream in a Bluetooth audio system (for example, a central device is a mobile phone and a terminal device is Bluetooth earphones), the audio stream needs to be encoded between Bluetooth devices due to limited Bluetooth bandwidth. For example, the Bluetooth device may encode the audio stream by using a coding scheme such as subband coding (subband coding, SBC) or advanced audio coding (advanced audio coding, AAC), and may select a specific bit rate to encode the audio stream as required.

In a related conventional technology, a bit rate used for encoding an audio stream is determined by a central device (for example, a mobile phone) side. Although currently the mobile phone side may adjust the bit rate based on a channel change (for example, a received signal strength indicator (received signal strength indicator, RSSI), a packet error rate (packet error rate, PER), and/or transmission queue congestion) sensed by the mobile phone side, the mobile phone is unaware of an environment (for example, interference) of a Bluetooth earphones side and a status (for example, a software running state) of the Bluetooth earphones. Therefore, timeliness and/or rationality of bit rate adjustment on the mobile phone side are/is insufficient.

### SUMMARY

Embodiments of this application provide an audio stream transmission method and apparatus, and a terminal device. Embodiments of this application further provide a computer-readable storage medium, to identify a status of the terminal device in time, adjust an encoding bit rate of an audio stream between the terminal device and a central device in time, thereby alleviating or avoiding unsmooth playing, and improving user experience.

According to a first aspect, an embodiment of this application provides an audio stream transmission method, applied to a terminal device. The terminal device establishes a connection to a central device, and the terminal device performs transmission of an audio stream from or to the central device through the connection. The method includes: obtaining a status of the terminal device, where the status of the terminal device includes: an antenna receiving status, a quantity of playing buffer packets in the terminal device, and/or central processing unit CPU load of the terminal device; determining an adjustment manner of an encoding bit rate of the audio stream based on the status of the terminal device; sending the adjustment manner to the central device, so that the central device adjusts the encoding bit rate of the audio stream based on the adjustment manner; and receiving the audio stream that is sent by the central device at an adjusted encoding bit rate.

In the audio stream transmission method, after obtaining the status of the terminal device, the terminal device determines the adjustment manner of the encoding bit rate of the audio stream based on the status of the terminal device, and then sends the adjustment manner to the central device. The central device adjusts the encoding bit rate of the audio stream based on the adjustment manner. Then, the central device sends the audio stream by using the adjusted encoding bit rate, and the terminal device receives the audio stream that is sent by the central device at the adjusted encoding bit rate. In this way, the status of the terminal device can be identified in time, and the encoding bit rate of the audio stream between the terminal device and the central device is adjusted in time, thereby alleviating or avoiding unsmooth playing, and improving user experience.

In a possible implementation, the sending the adjustment manner to the central device includes: sending the adjustment manner to the central device through a predefined private message.

In a possible implementation, the obtaining the status of the terminal device includes: obtaining a received signal strength indicator and a packet error rate of the terminal device; and determining the antenna receiving status of the terminal device based on the received signal strength indicator and the packet error rate.

In a possible implementation, the determining the adjustment manner of the encoding bit rate of the audio stream based on the status of the terminal device includes: when duration during which the antenna receiving status of the terminal device is in a good receiving state is greater than or equal to first preset duration, increasing the encoding bit rate of the audio stream; or when duration during which the antenna receiving status of the terminal device is not in a good receiving state is greater than or equal to second preset duration, reducing the encoding bit rate of the audio stream. That the antenna receiving status of the terminal device is in the good receiving state includes: The received signal strength indicator of the terminal device is greater than or equal to a preset received signal strength threshold and the packet error rate of the terminal device is less than or equal to a preset packet error rate threshold.

In a possible implementation, the status of the terminal device includes the quantity of playing buffer packets in the terminal device. The determining the adjustment manner of the encoding bit rate of the audio stream based on the status of the terminal device includes: when the quantity of playing buffer packets in the terminal device is less than or equal to a preset first buffer packet threshold, reducing the encoding bit rate of the audio stream; or when the quantity of playing buffer packets in the terminal device is greater than a preset second buffer packet threshold, increasing the encoding bit rate of the audio stream, where the second buffer packet threshold is greater than or equal to the first buffer packet threshold.

In a possible implementation, the status of the terminal device includes the CPU load of the terminal device. The determining the adjustment manner of the encoding bit rate of the audio stream based on the status of the terminal device includes: when duration during which the CPU load of the terminal device is greater than or equal to a preset first load threshold is greater than or equal to third preset duration, reducing the encoding bit rate of the audio stream; or when duration during which the CPU load of the terminal device is less than a preset second load threshold is greater than or equal to fourth preset duration, increasing the encoding bit rate of the audio stream.

In a possible implementation, the status of the terminal device includes at least two of the antenna receiving status, the quantity of playing buffer packets in the terminal device, and the CPU load of the terminal device. The determining the adjustment manner of the encoding bit rate of the audio stream based on the status of the terminal device includes: when a state in which the encoding bit rate of the audio stream needs to be reduced exists in the status of the terminal device, reducing the encoding bit rate of the audio stream based on the state in which the encoding bit rate of the audio stream needs to be reduced.

In a possible implementation, the reducing the encoding bit rate of the audio stream based on the state in which the encoding bit rate of the audio stream needs to be reduced includes: if there are at least two states in which the encoding bit rate of the audio stream needs to be reduced, prioritizing the at least two states; and reducing the encoding bit rate of the audio stream based on a state with a highest priority.

According to a second aspect, an embodiment of this application provides a terminal device. The terminal device establishes a connection to a central device, and the terminal device performs transmission of an audio stream from or to the central device through the connection. The terminal device includes one or more processors, a memory, a plurality of applications, and one or more computer programs. The one or more computer programs are stored in the memory, and the one or more computer programs include instructions. When the instructions are executed by the terminal device, the terminal device is enabled to perform the following steps: obtaining a status of the terminal device, where the status of the terminal device includes: an antenna receiving status, a quantity of playing buffer packets in the terminal device, and/or central processing unit CPU load of the terminal device; determining an adjustment manner of an encoding bit rate of the audio stream based on the status of the terminal device; sending the adjustment manner to the central device, so that the central device adjusts the encoding bit rate of the audio stream based on the adjustment manner; and receiving the audio stream that is sent by the central device at an adjusted encoding bit rate.

In a possible implementation, when the instructions are executed by the terminal device, the step of sending the adjustment manner to the central device by the terminal device includes: sending the adjustment manner to the central device through a predefined private message.

In a possible implementation, when the instructions are executed by the terminal device, the step of obtaining the status of the terminal device by the terminal device includes: obtaining a received signal strength indicator and a packet error rate of the terminal device; and determining the antenna receiving status of the terminal device based on the received signal strength indicator and the packet error rate.

In a possible implementation, when the instructions are executed by the terminal device, the step of determining, by the terminal device, the adjustment manner of the encoding bit rate of the audio stream based on the status of the terminal device includes: when duration during which the antenna receiving status of the terminal device is in a good receiving state is greater than or equal to first preset duration, increasing the encoding bit rate of the audio stream; or when duration during which the antenna receiving status of the terminal device is not in a good receiving state is greater than or equal to second preset duration, reducing the encoding bit rate of the audio stream. That the antenna receiving status of the terminal device is in the good receiving state includes: The received signal strength indicator of the terminal device is greater than or equal to a preset received signal strength threshold and the packet error rate of the terminal device is less than or equal to a preset packet error rate threshold.

In a possible implementation, the status of the terminal device includes the quantity of playing buffer packets in the terminal device. When the instructions are executed by the terminal device, the step of determining, by the terminal device, the adjustment manner of the encoding bit rate of the audio stream based on the status of the terminal device includes: when the quantity of playing buffer packets in the terminal device is less than or equal to a preset first buffer packet threshold, reducing the encoding bit rate of the audio stream; or when the quantity of playing buffer packets in the terminal device is greater than a preset second buffer packet threshold, increasing the encoding bit rate of the audio stream, where the second buffer packet threshold is greater than or equal to the first buffer packet threshold.

In a possible implementation, the status of the terminal device includes the CPU load of the terminal device. When the instructions are executed by the terminal device, the step of determining, by the terminal device, the adjustment manner of the encoding bit rate of the audio stream based on the status of the terminal device includes: when duration during which the CPU load of the terminal device is greater than or equal to a preset first load threshold is greater than or equal to third preset duration, reducing the encoding bit rate of the audio stream; or when duration during which the CPU load of the terminal device is less than a preset second load threshold is greater than or equal to fourth preset duration, increasing the encoding bit rate of the audio stream.

In a possible implementation, the status of the terminal device includes at least two of the antenna receiving status, the quantity of playing buffer packets in the terminal device, and the CPU load of the terminal device. When the instructions are executed by the terminal device, the step of determining, by the terminal device, the adjustment manner of the encoding bit rate of the audio stream based on the status of the terminal device includes: when a state in which the encoding bit rate of the audio stream needs to be reduced exists in the status of the terminal device, reducing the encoding bit rate of the audio stream based on the state in which the encoding bit rate of the audio stream needs to be reduced.

In a possible implementation, when the instructions are executed by the terminal device, the step of reducing, by the terminal device, the encoding bit rate of the audio stream based on the state in which the encoding bit rate of the audio stream needs to be reduced includes: if there are at least two states in which the encoding bit rate of the audio stream needs to be reduced, prioritizing the at least two states; and reducing the encoding bit rate of the audio stream based on a state with a highest priority.

According to a third aspect, an embodiment of this application provides an audio stream transmission apparatus. The apparatus is included in a terminal device, and the apparatus has a function of implementing behavior of the terminal device in the first aspect and the possible implementations of the first aspect. The function may be implemented by hardware, or may be implemented by executing corresponding software by hardware. The hardware or the software includes one or more modules or units corresponding to the foregoing function, for example, an obtaining module, a determining module, a sending module, and a receiving module.

It should be understood that technical solutions in the second aspect and the third aspect of embodiments of this application are consistent with the technical solution in the first aspect of embodiments of this application, and beneficial effects achieved by the aspects and corresponding feasible implementations are similar. Details are not described again.

According to a fourth aspect, an embodiment of this application provides a computer-readable storage medium. The computer-readable storage medium stores a computer program. When the computer program is run on a computer, the computer is enabled to perform the method according to the first aspect.

According to a fifth aspect, an embodiment of this application provides a computer program. When the computer program is executed by a computer, the computer program is used to perform the method according to the first aspect.

In a possible design, the programs in the fourth aspect and the fifth aspect may be all or partially stored in a storage medium that is encapsulated with a processor, or may be all or partially stored in a memory that is not encapsulated with a processor.

### BRIEF DESCRIPTION OF DRAWINGS

FIG. 1 is a diagram of an architecture of a Bluetooth audio system in a related conventional technology;
FIG. 2 is a flowchart of transmitting an audio stream from a central device to a terminal side device in a related conventional technology;
FIG. 3 is a diagram of a structure of a terminal device according to an embodiment of this application;
FIG. 4 is a diagram of a system architecture of an audio stream transmission method according to an embodiment of this application;
FIG. 5 is a flowchart of an audio stream transmission method according to another embodiment of this application;
FIG. 6 is a diagram of a structure of a private message packet based on the L2CAP protocol according to an embodiment of this application;
FIG. 7 is a flowchart of an audio stream transmission method according to another embodiment of this application;
FIG. 8 is a flowchart of an audio stream transmission method according to still another embodiment of this application;
FIG. 9 is a flowchart of an audio stream transmission method according to yet another embodiment of this application; and
FIG. 10 is a diagram of a structure of a terminal device according to another embodiment of this application.

### DESCRIPTION OF EMBODIMENTS

Terms used in implementations of this application are only used to explain specific embodiments of this application, but are not intended to limit this application.

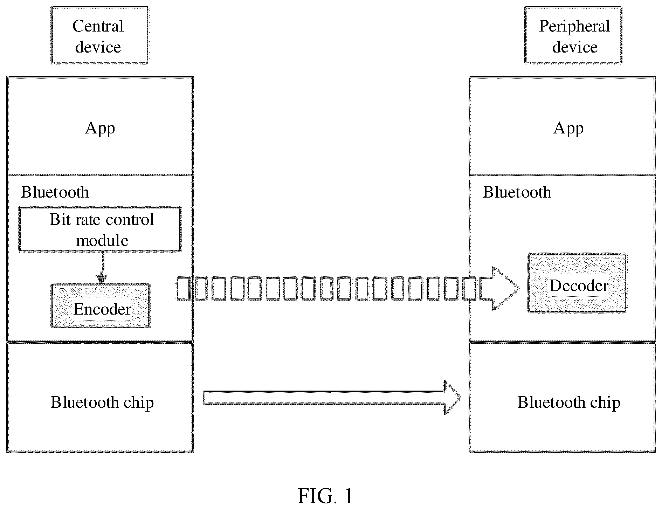

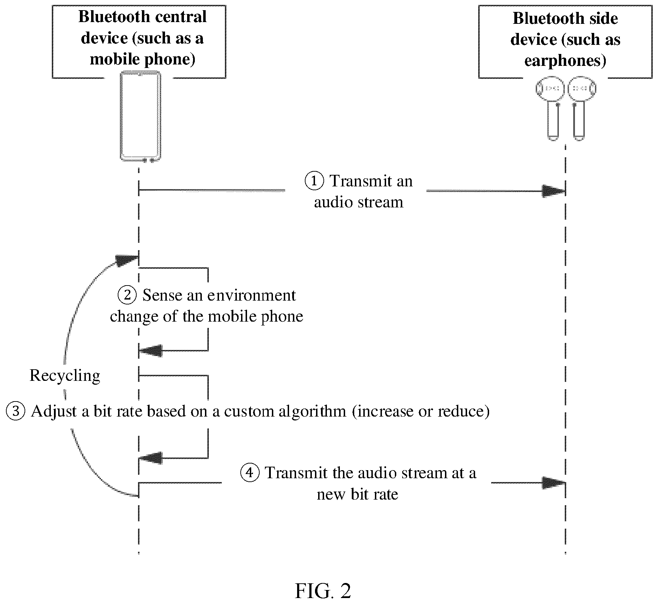

FIG. 1 is a diagram of an architecture of a Bluetooth audio system in a related conventional technology. In FIG. 1, the Bluetooth audio system includes a central device and a peripheral device (that is, a terminal device). As shown in FIG. 1, in the related conventional technology, a bit rate used for encoding an audio stream is determined by the central device (for example, a mobile phone) side. A variable encoder is disposed in the central device, and mainly used variable encoders currently include AAC, SBC, and the like. The central device adjusts a rate of the encoder based on a currently detected state (for example, a sending queue length and/or signal strength) of a local end, and encodes and sends the audio stream at a more appropriate bit rate, as shown in FIG. 2. FIG. 2 is a flowchart of transmitting an audio stream from a central device to a terminal side device in a related conventional technology. It should be noted that in descriptions of this embodiment of this application, the terminal side device is a terminal device, for example, Bluetooth earphones.

However, in the foregoing solution, because a status of the terminal device is unknown, an encoding bit rate adjusted by the central device is not necessarily optimal for the terminal device. In addition, because the central device is unaware of the status of the terminal device, the central device has a lag in adjusting the encoding bit rate, and an experience problem of a user cannot be resolved in time.

Based on the foregoing problems, an embodiment of this application provides an audio stream transmission method, so that a terminal device can accurately identify an exception on the terminal side, and determine necessity of adjusting an encoding bit rate by a central device. In addition, a status of the terminal device can be monitored, so that the central device can be notified in time to adjust an encoding bit rate of an audio stream, thereby improving user experience.

The audio stream transmission method provided in this embodiment of this application may be applied to the terminal device. The terminal device may be a device such as smart earphones and/or a smart speaker. A specific type of the terminal device is not limited in this embodiment of this application.

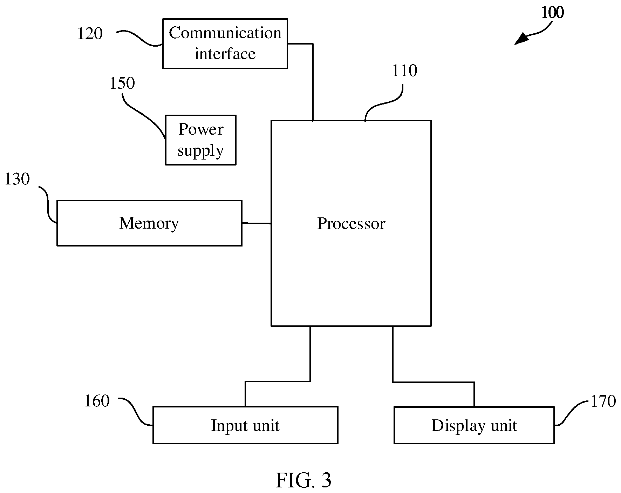

For example, FIG. 3 is a diagram of a structure of a terminal device according to an embodiment of this application. As shown in FIG. 3, a terminal device 100 may include a processor 110 and a communication interface 120. Optionally, the terminal device 100 may further include a memory 130. The processor 110, the communication interface 120, and the memory 130 may communicate with each other through an internal connection path, to transmit a control signal and/or a data signal. The memory 130 is configured to store a computer program. The processor 110 is configured to invoke the computer program from the memory 130 and run the computer program.

The processor 110 and the memory 130 may be combined into one processing apparatus, and are more commonly components independent of each other. The processor 110 is configured to execute program code stored in the memory 130. During specific implementation, the memory 130 may alternatively be integrated into the processor 110, or may be independent of the processor 110.

In addition, to improve functions of the terminal device 100, the terminal device 100 may further include one or more of an input unit 160, a display unit 170, and the like.

Optionally, the terminal device 100 may further include a power supply 150, configured to supply power to various devices or circuits in the terminal device 100.

It should be understood that the processor 110 in the terminal device 100 shown in FIG. 1 may be a system on a chip SoC. The processor 110 may include a central processing unit (central processing unit, CPU), and may further include another type of processor, for example, a graphics processing unit (graphics processing unit, GPU).

For ease of understanding, in the following embodiments of this application, the terminal device having the structure shown in FIG. 3 is used as an example to describe, in detail with reference to the accompanying drawings and application scenarios, the audio stream transmission method provided in this embodiment of this application. In descriptions of the following embodiments of this application, an example in which the terminal device 100 is a Bluetooth side device (for example, Bluetooth earphones) is used for description.

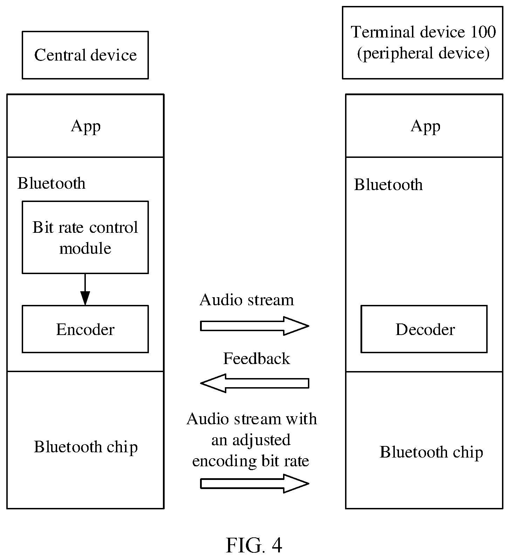

FIG. 4 is a diagram of a system architecture of an audio stream transmission method according to an embodiment of this application. As shown in FIG. 4, the system architecture includes a central device and a terminal device 100. The central device includes a bit rate control module, an encoder, and a Bluetooth chip. The bit rate control module is configured to determine an encoding bit rate of an audio stream to be transmitted by the central device to the terminal device 100. The encoder is configured to encode the audio stream based on the encoding bit rate determined by the bit rate control module. The Bluetooth chip is configured to send an audio stream encoded by the encoder to the terminal device 100.

The terminal device 100 includes a decoder and a Bluetooth chip. The Bluetooth chip is configured to receive the audio stream transmitted by the central device. The decoder is configured to decode the audio stream received by the Bluetooth chip. In this embodiment of this application, there is a status feedback between the terminal device 100 and the central device. In a process of playing a Bluetooth audio, the terminal device 100 may obtain a status of the terminal device 100, determine an adjustment manner of an encoding bit rate of an audio stream based on the status of the terminal device 100, and then send the adjustment manner to the central device by using the Bluetooth chip of the terminal device 100. The status of the terminal device may include an antenna receiving status, a quantity of playing buffer packets in the terminal device 100, and/or central processing unit (central processing unit, CPU) load of the terminal device 100.

After the Bluetooth chip in the central device receives the adjustment manner sent by the terminal device 100, the bit rate control module adjusts the encoding bit rate based on the adjustment manner.

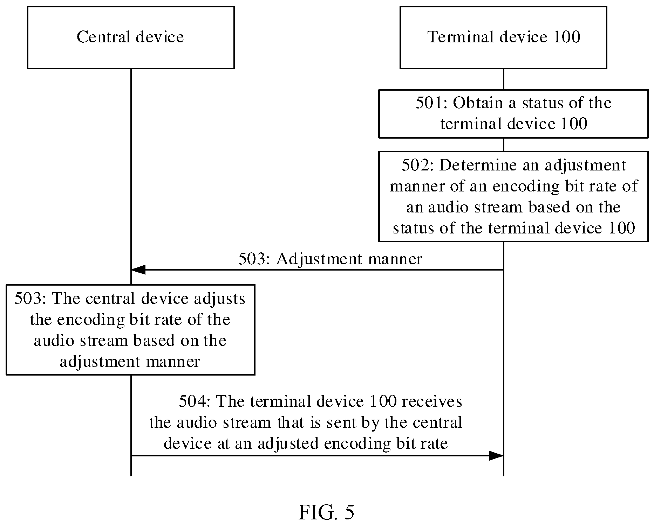

With reference to the system architecture shown in FIG. 4, the following describes an audio stream transmission method according to an embodiment of this application. FIG. 5 is a flowchart of an audio stream transmission method according to another embodiment of this application. As shown in FIG. 5, the audio stream transmission method may include the following steps.

Step 501: A terminal device 100 obtains a status of the terminal device 100.

The status of the terminal device may include an antenna receiving status, a quantity of playing buffer packets in the terminal device 100, and/or CPU load of the terminal device 100.

Step 502: The terminal device 100 determines an adjustment manner of an encoding bit rate of an audio stream based on the status of the terminal device 100.

The audio stream includes an audio stream transmitted between the terminal device 100 and a central device that is connected to the terminal device 100.

Step 503: The terminal device 100 sends the adjustment manner to the central device, so that the central device adjusts the encoding bit rate of the audio stream based on the adjustment manner.

During specific implementation, the adjustment manner of the encoding bit rate of the audio stream may include a level indication or an up/down indication. For example, the level indication may indicate to increase or reduce the encoding bit rate of the audio stream to a first level. The up/down indication may indicate to increase or reduce the encoding bit rate of the audio stream. For example, the up/down indication may indicate to increase or reduce the encoding bit rate of the audio stream by N steps, where N is a positive integer, and N≥1. A size of each step may be set during specific implementation, which is not limited in this embodiment.

In this embodiment, after determining the adjustment manner of the encoding bit rate of the audio stream based on the status of the terminal device 100, the terminal device 100 sends the determined adjustment manner to the central device, and the central device may adjust the encoding bit rate of the audio stream based on the adjustment manner fed back by the terminal device 100. This can compensate for a defect that the central device side is unaware of the status of the terminal device 100 and the central device has a lag in adjusting the encoding bit rate.

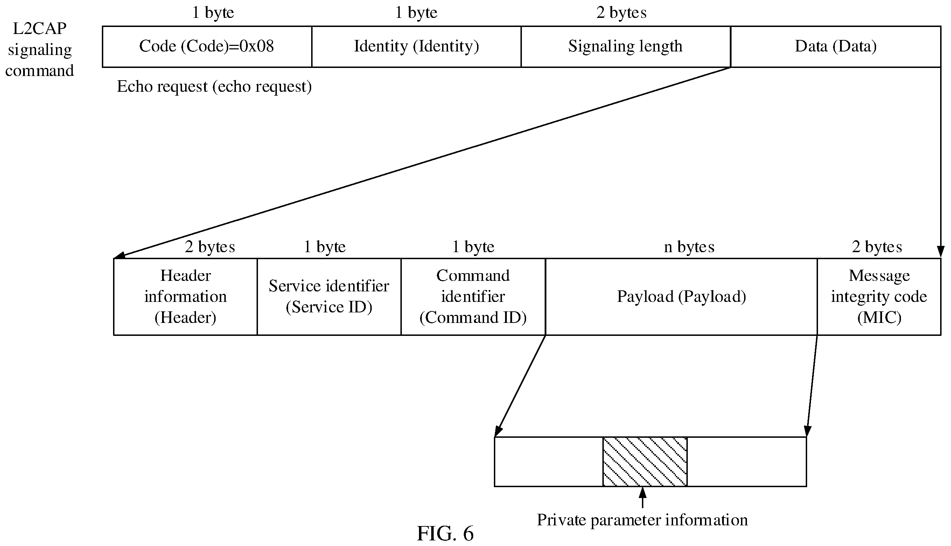

Specifically, in this embodiment, that the terminal device 100 sends the adjustment manner to the central device may be: sending the adjustment manner to the central device through a predefined private message. An implementation may be as follows: The terminal device 100 encapsulates the adjustment manner at an application layer, and sends the encapsulated data packet to the central device based on the space packet protocol (space packet protocol, SPP). Another implementation may be as follows: A private message packet is defined based on the logical link control and adaptation protocol (logical link control and adaptation protocol, L2CAP) protocol, and the adjustment manner is sent to the central device through the private message packet. In this implementation, a structure of the private message packet may be shown in FIG. 6. FIG. 6 is a diagram of a structure of a private message packet based on the L2CAP protocol according to an embodiment of this application. Specifically, the terminal device 100 may encapsulate the adjustment manner in a "private parameter information" part shown in FIG. 6.

Step 504: The terminal device 100 receives the audio stream that is sent by the central device at an adjusted encoding bit rate.

In the audio stream transmission method, after obtaining the status of the terminal device 100, the terminal device 100 determines the adjustment manner of the encoding bit rate of the audio stream based on the status of the terminal device 100, and then sends the adjustment manner to the central device. The central device adjusts the encoding bit rate of the audio stream based on the adjustment manner. Then, the central device sends the audio stream by using the adjusted encoding bit rate, and the terminal device 100 receives the audio stream that is sent by the central device at the adjusted encoding bit rate. In this way, the status of the terminal device 100 can be identified in time, and the encoding bit rate of the audio stream between the terminal device 100 and the central device is adjusted in time, thereby alleviating or avoiding unsmooth playing, and improving user experience.

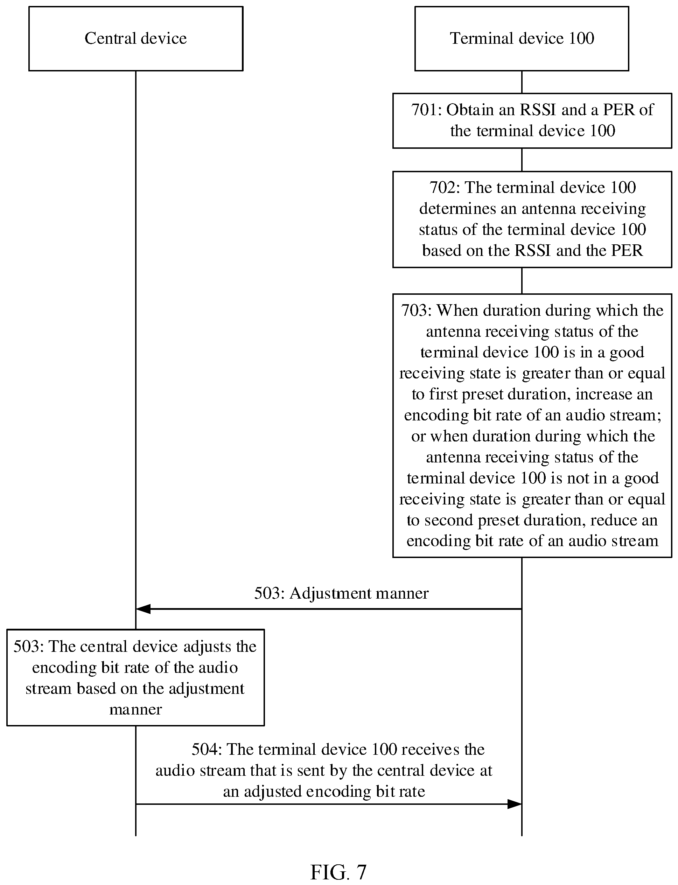

FIG. 7 is a flowchart of an audio stream transmission method according to another embodiment of this application. As shown in FIG. 7, in the embodiment shown in FIG. 5 of this application, step 501 may include the following steps.

Step 701: The terminal device 100 obtains a received signal strength indicator (received signal strength indicator, RSSI) and a packet error rate (packet error rate, PER) of the terminal device 100.

Step 702: The terminal device 100 determines the antenna receiving status of the terminal device 100 based on the RSSI and the PER.

In this way, step 502 may include the following step.

Step 703: When duration during which the antenna receiving status of the terminal device 100 is in a good receiving state is greater than or equal to first preset duration, increase the encoding bit rate of the audio stream; or when duration during which the antenna receiving status of the terminal device 100 is not in a good receiving state is greater than or equal to second preset duration, reduce the encoding bit rate of the audio stream.

That the antenna receiving status of the terminal device 100 is in the good receiving state may be: The received signal strength indicator of the terminal device 100 is greater than or equal to a preset received signal strength threshold and the packet error rate of the terminal device 100 is less than or equal to a preset packet error rate threshold. Values of the preset received signal strength threshold and the preset packet error rate threshold may be set according to an actual requirement and/or system performance or the like during specific implementation. This embodiment does not limit the values of the preset received signal strength threshold and the preset packet error rate threshold. Lengths of the first preset duration and the second preset duration may be set according to an actual requirement and/or system performance or the like during specific implementation. This embodiment does not limit the lengths of the first preset duration and the second preset duration.

In other words, when the antenna receiving status of the terminal device 100 is in the good receiving state for a long time (for example, greater than or equal to the first preset duration), the terminal device 100 may generate an adjustment manner for increasing the encoding bit rate. After receiving the adjustment manner, the central device increases an encoding bit rate of an encoder, thereby improving Bluetooth audio effect. When the duration during which the antenna receiving status of the terminal device 100 is not in the good receiving state is greater than or equal to the second preset duration, the terminal device 100 may generate an adjustment manner for reducing the encoding bit rate. After receiving the adjustment manner, the central device reduces an encoding bit rate of an encoder, so that the encoding bit rate between the terminal device 100 and the central device can be adjusted in time, thereby alleviating or avoiding unsmooth playing, and improving user experience.

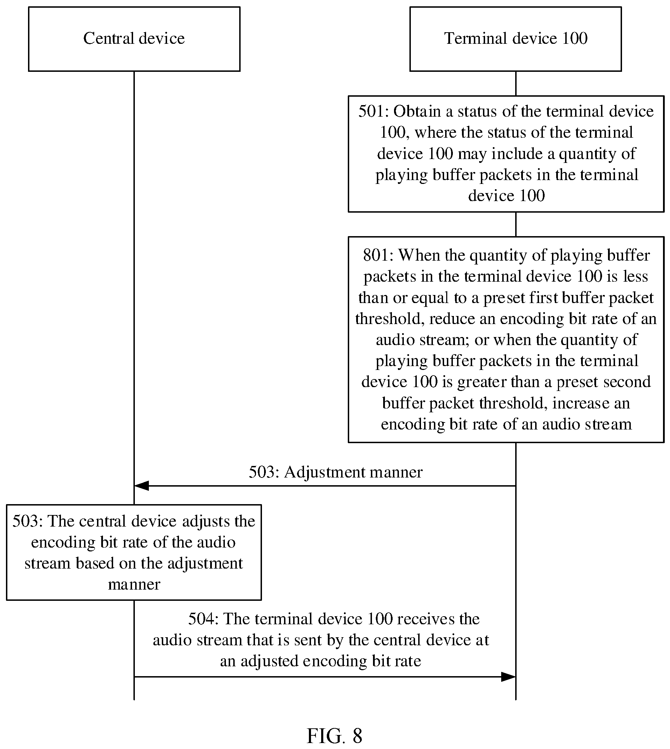

FIG. 8 is a flowchart of an audio stream transmission method according to still another embodiment of this application. In this embodiment, the status of the terminal device 100 may include the quantity of playing buffer packets in the terminal device 100. As shown in FIG. 8, in the embodiment shown in FIG. 5 of this application, step 502 may include the following step.

Step 801: When the quantity of playing buffer packets in the terminal device 100 is less than or equal to a preset first buffer packet threshold, reduce the encoding bit rate of the audio stream; or when the quantity of playing buffer packets in the terminal device 100 is greater than a preset second buffer packet threshold, increase the encoding bit rate of the audio stream.

The second buffer packet threshold is greater than or equal to the first buffer packet threshold. Values of the first buffer packet threshold and the second buffer packet threshold may be set according to system performance and/or an implementation requirement or the like during specific implementation. This embodiment does not limit the values of the first buffer packet threshold and the second buffer packet threshold, provided that the second buffer packet threshold is greater than or equal to the first buffer packet threshold.

In this embodiment, when the terminal device 100 detects that the quantity of playing buffer packets is less than or equal to the preset first buffer packet threshold, it indicates that to-be-played data in the terminal device 100 is about to be insufficient. In this case, the terminal device 100 may generate an adjustment manner of reducing the encoding bit rate. After receiving the adjustment manner, the central device reduces an encoding bit rate of an encoder to lower transmission load, thereby alleviating or avoiding occurrence of an unsmooth sound before "lag" occurs on the terminal device 100. When the quantity of playing buffer packets in the terminal device 100 is greater than the preset second buffer packet threshold, it indicates that to-be-played data in the terminal device 100 is sufficient. In this case, the terminal device 100 may generate an adjustment manner of increasing the encoding bit rate. After receiving the adjustment manner, the central device increases an encoding bit rate of an encoder, thereby improving Bluetooth audio effect.

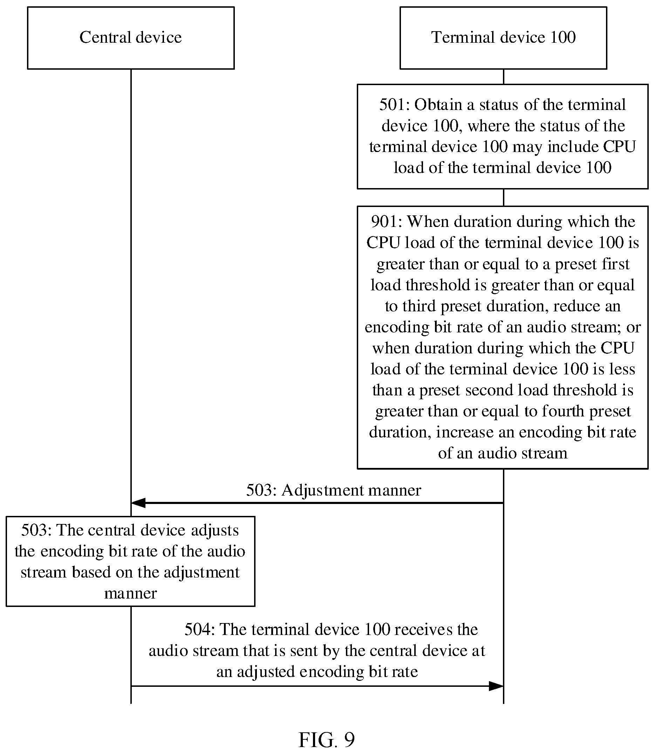

FIG. 9 is a flowchart of an audio stream transmission method according to yet another embodiment of this application. In this embodiment, the status of the terminal device 100 may include the CPU load of the terminal device 100. As shown in FIG. 9, in the embodiment shown in FIG. 5 of this application, step 502 may include the following step.

Step 901: When duration during which the CPU load of the terminal device 100 is greater than or equal to a preset first load threshold is greater than or equal to third preset duration, reduce the encoding bit rate of the audio stream; or when duration during which the CPU load of the terminal device 100 is less than a preset second load threshold is greater than or equal to fourth preset duration, increase the encoding bit rate of the audio stream.

Values of the first load threshold and the second load threshold may be set according to an actual requirement and/or system performance or the like during specific implementation. This embodiment does not limit the values of the first load threshold and the second load threshold, provided that the first load threshold is greater than the second load threshold. Lengths of the third preset duration and the fourth preset duration may be set according to an actual requirement and/or system performance or the like during specific implementation. This embodiment does not limit the lengths of the third preset duration and the fourth preset duration.

In other words, in this embodiment, when the CPU load of the terminal device 100 is in a high-load state (for example, greater than or equal to the preset first load threshold) for a long time (for example, greater than or equal to the third preset duration), the terminal device 100 may generate an adjustment manner of reducing the encoding bit rate of the audio stream. After receiving the adjustment manner, the central device reduces an encoding bit rate of an encoder to lower transmission load, thereby lowering the CPU load of the terminal device 100, and alleviating or avoiding occurrence of an unsmooth sound. When the CPU load of the terminal device 100 is in a low-load state (for example, less than the preset second load threshold) for a long time (for example, greater than or equal to the fourth preset duration), the terminal device 100 may generate an adjustment manner for increasing the encoding bit rate of the audio stream. After receiving the adjustment manner, the central device increases an encoding bit rate of an encoder, thereby improving Bluetooth audio effect.

In addition, it should be noted that the embodiments shown in FIG. 7, FIG. 8, and FIG. 9 in this application may be combined with each other. In other words, the status of the terminal device 100 may include at least two of the antenna receiving status, the quantity of playing buffer packets in the terminal device 100, and the CPU load of the terminal device 100. In this case, step 502 may be: When a state in which the encoding bit rate of the audio stream needs to be reduced exists in the status of the terminal device 100, the encoding bit rate of the audio stream is reduced based on the state in which the encoding bit rate of the audio stream needs to be reduced. However, if there are at least two states in which the encoding bit rate of the audio stream needs to be reduced, the terminal device 100 may prioritize the at least two states, and reduce the encoding bit rate of the audio stream based on a state with a highest priority.

For example, in an implementation, it is assumed that the duration during which the antenna receiving status of the terminal device 100 is in the good receiving state is greater than or equal to the first preset duration, and the duration during which the CPU load of the terminal device 100 is greater than or equal to the preset first load threshold is greater than or equal to the third preset duration. In this case, the encoding bit rate of the audio stream needs to be increased based on the antenna receiving status of the terminal device 100, and the encoding bit rate of the audio stream needs to be reduced based on the CPU load. In this case, the terminal device 100 reduces the encoding bit rate of the audio stream based on the state in which the encoding bit rate of the audio stream needs to be reduced. That is, the terminal device 100 reduces the encoding bit rate of the audio stream based on the condition that the duration during which the CPU load is greater than or equal to the preset first load threshold is greater than or equal to the third preset duration.

In another implementation, it is assumed that the duration during which the antenna receiving status of the terminal device 100 is not in the good receiving state is greater than or equal to the second preset duration, the quantity of playing buffer packets in the terminal device 100 is less than or equal to the preset first buffer packet threshold, and the duration during which the CPU load of the terminal device 100 is greater than or equal to the preset first load threshold is greater than or equal to the third preset duration. The encoding bit rate of the audio stream needs to be reduced in the foregoing three states. In this case, the terminal device 100 may prioritize the three states: the antenna receiving status, the quantity of playing buffer packets, and the CPU load, and then the terminal device 100 reduces the encoding bit rate of the audio stream based on a state with a highest priority. For example, a result of the prioritizing may be: the quantity of playing buffer packets>the antenna receiving status>the CPU load. Therefore, the terminal device 100 may reduce the encoding bit rate of the audio stream based on the condition that the quantity of playing buffer packets is less than or equal to the preset first buffer packet threshold.

It can be understood that some or all of the steps or operations in the foregoing embodiments are merely examples, and other operations or variants of various operations may be further performed in embodiments of this application. In addition, the steps may be performed in another order different from that presented in the foregoing embodiments, and not all the operations in the foregoing embodiments may be performed.

It may be understood that, to implement the foregoing functions, a terminal device includes corresponding hardware and/or software modules for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, functional modules of the terminal device may be obtained through division based on the foregoing method embodiments. For example, each functional module may be obtained through division based on each corresponding function, or two or more functions may be integrated into one module. The integrated module may be implemented in a form of hardware. It should be noted that module division in embodiments is an example and is merely logical function division. During actual implementation, there may be another division manner.

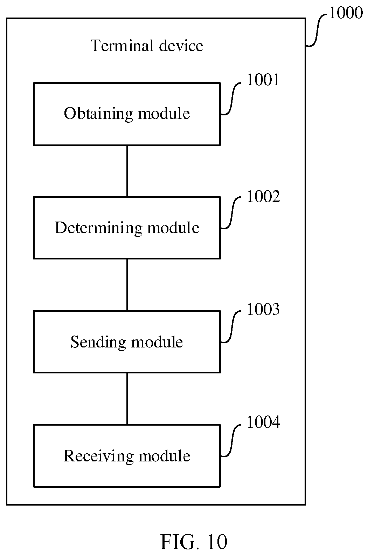

FIG. 10 is a diagram of a structure of a terminal device according to another embodiment of this application. The terminal device establishes a connection to a central device, and the terminal device performs transmission of an audio stream from or to the central device through the connection. When each functional module is obtained through division based on each corresponding function, FIG. 10 shows a possible diagram of composition of a terminal device 1000 related in the foregoing embodiments. As shown in FIG. 10, the terminal device 1000 may include an obtaining module 1001, a determining module 1002, a sending module 1003, and a receiving module 1004.

The obtaining module 1001 is configured to obtain a status of the terminal device. The status of the terminal device includes an antenna receiving status, a quantity of playing buffer packets in the terminal device, and/or CPU load of the terminal device.

The determining module 1002 is configured to determine an adjustment manner of an encoding bit rate of an audio stream based on the status of the terminal device.

The sending module 1003 is configured to send the adjustment manner to the central device, so that the central device adjusts the encoding bit rate of the audio stream based on the adjustment manner.

The receiving module 1004 is configured to receive the audio stream that is sent by the central device at an adjusted encoding bit rate.

In this embodiment, the sending module 1003 is specifically configured to send the adjustment manner to the central device through a predefined private message.

In an implementation, the obtaining module 1001 is specifically configured to: obtain a received signal strength indicator and a packet error rate of the terminal device, and determine the antenna receiving status of the terminal device based on the received signal strength indicator and the packet error rate.

The determining module 1002 is specifically configured to: when duration during which the antenna receiving status of the terminal device is in a good receiving state is greater than or equal to first preset duration, increase the encoding bit rate of the audio stream; or when duration during which the antenna receiving status of the terminal device is not in a good receiving state is greater than or equal to second preset duration, reduce the encoding bit rate of the audio stream. That the antenna receiving status of the terminal device is in the good receiving state includes: The received signal strength indicator of the terminal device is greater than or equal to a preset received signal strength threshold and the packet error rate of the terminal device is less than or equal to a preset packet error rate threshold.

In another implementation, the status of the terminal device includes the quantity of playing buffer packets in the terminal device. In this case, the determining module 1002 is specifically configured to: when the quantity of playing buffer packets in the terminal device is less than or equal to a preset first buffer packet threshold, reduce the encoding bit rate of the audio stream; or when the quantity of playing buffer packets in the terminal device is greater than a preset second buffer packet threshold, increase the encoding bit rate of the audio stream, where the second buffer packet threshold is greater than or equal to the first buffer packet threshold.

In still another implementation, the status of the terminal device includes the CPU load of the terminal device. In this case, the determining module 1002 is specifically configured to: when duration during which the CPU load of the terminal device is greater than or equal to a preset first load threshold is greater than or equal to third preset duration, reduce the encoding bit rate of the audio stream; or when duration during which the CPU load of the terminal device is less than a preset second load threshold is greater than or equal to fourth preset duration, increase the encoding bit rate of the audio stream.

In yet another implementation, the status of the terminal device may include at least two of the antenna receiving status, the quantity of playing buffer packets in the terminal device, and the CPU load of the terminal device. The determining module 1002 is specifically configured to: when a state in which the encoding bit rate of the audio stream needs to be reduced exists in the status of the terminal device, reduce the encoding bit rate of the audio stream based on the state in which the encoding bit rate of the audio stream needs to be reduced. The determining module 1002 is specifically configured to: when there are at least two states in which the encoding bit rate of the audio stream needs to be reduced, prioritize the at least two states, and reduce the encoding bit rate of the audio stream based on a state with a highest priority.

It should be noted that all related content of the steps in the method embodiments shown in FIG. 5 to FIG. 9 in this application may be cited in functional description of corresponding functional modules. Details are not described herein.

The terminal device 1000 provided in this embodiment is configured to perform the audio stream transmission method provided in the method embodiments shown in FIG. 5 to FIG. 9 of this application, and therefore can achieve same effects as the foregoing methods.

It should be understood that the terminal device 1000 may correspond to the terminal device 100 shown in FIG. 3. Functions of the obtaining module 1001 and the determining module 1002 may be implemented by the communication interface 120 in the terminal device 100 shown in FIG. 3. Functions of the sending module 1003 and the receiving module 1004 may be implemented by the processor 110 in the terminal device 100 shown in FIG. 3.

When an integrated unit is used, the terminal device 1000 may include a processing module, a storage module, and a communication module.

The processing module may be configured to control and manage an action of the terminal device 1000. For example, the processing module may be configured to support the terminal device 1000 in performing the steps performed by the obtaining module 1001, the determining module 1002, the sending module 1003, and the receiving module 1004. The storage module may be configured to support the terminal device 1000 in storing program code, data, and the like. The communication module may be configured to support communication between the terminal device 1000 and another device.

The processing module may be a processor or a controller, and may implement or execute various example logic blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the terminal device 1000 in this embodiment may be a device having the structure shown in FIG. 3.

An embodiment of this application further provides a computer-readable storage medium. The computer-readable storage medium stores a computer program. When the computer program is run on a computer, the computer is enabled to perform the methods provided in the embodiments shown in FIG. 5 to FIG. 9 in this application.

An embodiment of this application further provides a computer program product. The computer program product includes a computer program. When the computer program is run on a computer, the computer is enabled to perform the methods provided in the embodiments shown in FIG. 5 to FIG. 9 in this application.

In embodiments of this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and a similar expression thereof refer to any combination of these terms, including any combination of singular items or plural terms. For example, at least one of a, b, or c may indicate a, b, c, a and b, a and c, b and c, or a, b, and c, where a, b, and c may be singular or plural.

A person of ordinary skill in the art may be aware that the units and algorithm steps described in the embodiments disclosed in this specification can be implemented by a combination of electronic hardware, computer software, and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

It may be clearly understood by a person skilled in the art that, for convenient and brief description, for a detailed working process of the foregoing system, apparatus, and unit, reference may be made to a corresponding process in the foregoing method embodiments. Details are not described herein again.

In several embodiments provided in this application, when any function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. An audio stream transmission method, applied to a terminal device, wherein the terminal device establishes a connection to a central device, the terminal device performs transmission of an audio stream from or to the central device through the connection, and the method comprises:
obtaining a status of the terminal device, wherein the status of the terminal device comprises: an antenna receiving status, a quantity of playing buffer packets in the terminal device, and/or central processing unit CPU load of the terminal device;
determining an adjustment manner of an encoding bit rate of the audio stream based on the status of the terminal device;
sending the adjustment manner to the central device, so that the central device adjusts the encoding bit rate of the audio stream based on the adjustment manner; and
receiving the audio stream that is sent by the central device at an adjusted encoding bit rate.

2. The method according to claim 1, wherein the sending the adjustment manner to the central device comprises:
sending the adjustment manner to the central device through a predefined private message.

3. The method according to claim 1, wherein the obtaining the status of the terminal device comprises:
obtaining a received signal strength indicator and a packet error rate of the terminal device; and
determining the antenna receiving status of the terminal device based on the received signal strength indicator and the packet error rate.

4. The method according to claim 3, wherein the determining the adjustment manner of the encoding bit rate of the audio stream based on the status of the terminal device comprises:
when duration during which the antenna receiving status of the terminal device is in a good receiving state is greater than or equal to first preset duration, increasing the encoding bit rate of the audio stream; or when duration during which the antenna receiving status of the terminal device is not in a good receiving state is greater than or equal to second preset duration, reducing the encoding bit rate of the audio stream; and that the antenna receiving status of the terminal device is in the good receiving state comprises: the received signal strength indicator of the terminal device is greater than or equal to a preset received signal strength threshold and the packet error rate of the terminal device is less than or equal to a preset packet error rate threshold.

5. The method according to claim 1, wherein the status of the terminal device comprises the quantity of playing buffer packets in the terminal device; and
the determining the adjustment manner of the encoding bit rate of the audio stream based on the status of the terminal device comprises:
when the quantity of playing buffer packets in the terminal device is less than or equal to a preset first buffer packet threshold, reducing the encoding bit rate of the audio stream; or when the quantity of playing buffer packets in the terminal device is greater than a preset second buffer packet threshold, increasing the encoding bit rate of the audio stream, wherein the second buffer packet threshold is greater than or equal to the first buffer packet threshold.

6. The method according to claim 1, wherein the status of the terminal device comprises the CPU load of the terminal device; and
the determining the adjustment manner of the encoding bit rate of the audio stream based on the status of the terminal device comprises:
when duration during which the CPU load of the terminal device is greater than or equal to a preset first load threshold is greater than or equal to third preset duration, reducing the encoding bit rate of the audio stream; or when duration during which the CPU load of the terminal device is less than a preset second load threshold is greater than or equal to fourth preset duration, increasing the encoding bit rate of the audio stream.

7. The method according to claim 1, wherein the status of the terminal device comprises at least two of the antenna receiving status, the quantity of playing buffer packets in the terminal device, and the CPU load of the terminal device; and
the determining the adjustment manner of the encoding bit rate of the audio stream based on the status of the terminal device comprises:
when a state in which the encoding bit rate of the audio stream needs to be reduced exists in the status of the terminal device, reducing the encoding bit rate of the audio stream based on the state in which the encoding bit rate of the audio stream needs to be reduced.

8. The method according to claim 7, wherein the reducing the encoding bit rate of the audio stream based on the state in which the encoding bit rate of the audio stream needs to be reduced comprises:
if there are at least two states in which the encoding bit rate of the audio stream needs to be reduced, prioritizing the at least two states; and
reducing the encoding bit rate of the audio stream based on a state with a highest priority.

9. A terminal device, wherein the terminal device establishes a connection to a central device, the terminal device performs transmission of an audio stream from or to the central device through the connection, and the terminal device comprises:
one or more processors, a memory, a plurality of applications, and one or more computer programs, wherein the one or more computer programs are stored in the memory, the one or more computer programs comprise instructions, and when the instructions are executed by the terminal device, the terminal device is enabled to perform the following steps:
obtaining a status of the terminal device, wherein the status of the terminal device comprises: an antenna receiving status, a quantity of playing buffer packets in the terminal device, and/or central processing unit CPU load of the terminal device;
determining an adjustment manner of an encoding bit rate of the audio stream based on the status of the terminal device;
sending the adjustment manner to the central device, so that the central device adjusts the encoding bit rate of the audio stream based on the adjustment manner; and
receiving the audio stream that is sent by the central device at an adjusted encoding bit rate.

10. The terminal device according to claim 9, wherein when the instructions are executed by the terminal device, the step of sending the adjustment manner to the central device by the terminal device comprises:
sending the adjustment manner to the central device through a predefined private message.

11. The terminal device according to claim 9, wherein when the instructions are executed by the terminal device, the step of obtaining the status of the terminal device by the terminal device comprises:
obtaining a received signal strength indicator and a packet error rate of the terminal device; and
determining the antenna receiving status of the terminal device based on the received signal strength indicator and the packet error rate.

12. The terminal device according to claim 11, wherein when the instructions are executed by the terminal device, the step of determining, by the terminal device, the adjustment manner of the encoding bit rate of the audio stream based on the status of the terminal device comprises:
when duration during which the antenna receiving status of the terminal device is in a good receiving state is greater than or equal to first preset duration, increasing the encoding bit rate of the audio stream; or when duration during which the antenna receiving status of the terminal device is not in a good receiving state is greater than or equal to second preset duration, reducing the encoding bit rate of the audio stream; and that the antenna receiving status of the terminal device is in the good receiving state comprises: the received signal strength indicator of the terminal device is greater than or equal to a preset received signal strength threshold and the packet error rate of the terminal device is less than or equal to a preset packet error rate threshold.

13. The terminal device according to claim 11, wherein the status of the terminal device comprises the quantity of playing buffer packets in the terminal device; and when the instructions are executed by the terminal device, the step of determining, by the terminal device, the adjustment manner of the encoding bit rate of the audio stream based on the status of the terminal device comprises:
when the quantity of playing buffer packets in the terminal device is less than or equal to a preset first buffer packet threshold, reducing the encoding bit rate of the audio stream; or when the quantity of playing buffer packets in the terminal device is greater than a preset second buffer packet threshold, increasing the encoding bit rate of the audio stream, wherein the second buffer packet threshold is greater than or equal to the first buffer packet threshold.

14. The terminal device according to claim 9, wherein the status of the terminal device comprises the CPU load of the terminal device; and when the instructions are executed by the terminal device, the step of determining, by the terminal device, the adjustment manner of the encoding bit rate of the audio stream based on the status of the terminal device comprises:
when duration during which the CPU load of the terminal device is greater than or equal to a preset first load threshold is greater than or equal to third preset duration, reducing the encoding bit rate of the audio stream; or when duration during which the CPU load of the terminal device is less than a preset second load threshold is greater than or equal to fourth preset duration, increasing the encoding bit rate of the audio stream.

15. The terminal device according to claim 9, wherein the status of the terminal device comprises at least two of the antenna receiving status, the quantity of playing buffer packets in the terminal device, and the CPU load of the terminal device; and
when the instructions are executed by the terminal device, the step of determining, by the terminal device, the adjustment manner of the encoding bit rate of the audio stream based on the status of the terminal device comprises:
when a state in which the encoding bit rate of the audio stream needs to be reduced exists in the status of the terminal device, reducing the encoding bit rate of the audio stream based on the state in which the encoding bit rate of the audio stream needs to be reduced.

16. The terminal device according to claim 15, wherein when the instructions are executed by the terminal device, the step of reducing, by the terminal device, the encoding bit rate of the audio stream based on the state in which the encoding bit rate of the audio stream needs to be reduced comprises:
if there are at least two states in which the encoding bit rate of the audio stream needs to be reduced, prioritizing the at least two states; and
reducing the encoding bit rate of the audio stream based on a state with a highest priority.

17. An audio stream transmission apparatus, disposed in a terminal device, wherein the terminal device establishes a connection to a central device, the terminal device performs transmission of an audio stream from or to the central device through the connection, and the transmission apparatus comprises:
an obtaining module, configured to obtain a status of the terminal device, wherein the status of the terminal device comprises: an antenna receiving status, a quantity of playing buffer packets in the terminal device, and/or central processing unit CPU load of the terminal device;
a determining module, configured to determine an adjustment manner of an encoding bit rate of the audio stream based on the status of the terminal device;
a sending module, configured to send the adjustment manner to the central device, so that the central device adjusts the encoding bit rate of the audio stream based on the adjustment manner; and
a receiving module, configured to receive the audio stream that is sent by the central device at an adjusted encoding bit rate.

18. A computer-readable storage medium, wherein the computer-readable storage medium stores a computer program, and when the computer program is run on a computer, the computer is enabled to perform the method according to any one of claims 1 to 8.
